# EUROPÄISCHE PATENTSCHRIFT

(11) **EP 1 111 270 B1**
(45) Veröffentlichungstag und Bekanntmachung des Hinweises auf die Patenterteilung: **31.05.2006**
(21) Anmeldenummer: 00126038.9
(22) Anmeldetag: 29.11.2000
(51) Int. Cl.: F16F 15/30, F16F 15/315

(54) **Schwungrad zum Speichern von Rotationsenergie**
Flywheel for the storage of rotational energy
Volant pour le stockage d'énergie de rotation

(30) Priorität: 21.12.1999 DE 19961643
(43) Veröffentlichungstag der Anmeldung: 27.06.2001
(73) Patentinhaber: Canders, Wolf-Rüdiger, Prof. Dr.-Ing., 37520 Osterode (DE)
(72) Erfinder: Canders, Wolf-Rüdiger, Prof. Dr.-Ing., 37520 Osterode (DE)
(74) Vertreter: Gramm, Werner

(56) Entgegenhaltungen:
- WO-A-99/53597
- US-A- 4 821 599
- US-A- 4 991 462
- US-A- 5 566 588

## Beschreibung

Die Erfindung bezieht sich auf ein Schwungrad zum Speichern von Rotationsernergie, mit einem mit einer rotierenden Maschine verbundenen inneren Ring zur Übertragung von Rotationsenergie, einem radial äußeren Schwungring, und einer Koppeleinrichtung zur Übertragung von Drehmomenten, die in einem radialen Zwischenraum zwischen dem inneren Ring und dem Schwungring vorgesehen und mit dem inneren Ring und dem Schwungring verbunden ist.

Derartige Schwungräder werden insbesondere für elektrische Maschinen, die als Motor und/oder Generator arbeiten können, verwendet.

Moderne Schwungringe werden vorzugsweise aus Faserverbundwerkstoffen hergestellt und können bis zu extrem hohen Umfangsgeschwindigkeiten, z.B. 800 bis 1000 m/sec, betrieben werden. Für die Ein- und Auskopplung der gespeicherten Rotationsenergie werden dabei insbesondere entsprechend hochtourige elektrische Maschinen, die als Motor und/oder Generator arbeiten können, verwendet.

Die elastischen Radialverschiebungen in solch einem Schwungring sind erheblich und vom Betrag her deutlich größer, als die zulässigen elastischen Radialverschiebungen des Rotorjoches der mit dem Schwungring verbundenen elektrischen Maschine. Somit ist die zulässige Umfangsgeschwindigkeit des Schwungringes stets wesentlich größer als die eines Maschinenrotors mit konventionellem Blechpaket. Berücksichtigt man, daß die hohe Festigkeit des Faserverbundwerkstoffes nur bei Ringen mit einem Radienverhältnis von Innenradius Rᵢ zu Außenradius Rₐ von Rᵢ/Rₐ>0,7 ausgenutzt werden kann, führt dies zu einem Kompatibilitätsproblem, das bisher durch drei unterschiedliche Bauweisen von Schwungradspeichern gelöst wurde:

Zum einen ist eine Begrenzung der Umfangsgeschwindigkeit der Faserverbundstruktur durch direktes Bewickeln des in Außenläuferbauweise ausgeführten Maschinenrotors möglich, so daß die elastischen Verschiebungen des Maschinenrotors, der zu einem gewissen Anteil durch die mit Vorspannung aufgebrachten Faserstruktur gestützt wird, stets unterhalb der Streckgrenze des Rotorblechpaketes bleiben. Dies hat lange zylinderförmige Schwungkörper zur Folge mit einem Trägheitsmoment Jₐ um die Querachse des Zylinders, welches größer ist als das Trägheitsmoment um die Rotationsachse Jₚ des Zylinders. Dies ist aus rotordynamischer Sicht (Kreiseltheorie, Durchfahren der zweiten kritischen Drehzahl, vgl. Gasch/Pfützner, Rotordynamik, Springer Verlag) eine ungünstige Ausführung, die dementsprechend steife Lagerungen benötigt.

Zweitens ist eine Trennung von Schwungring und elektrischer Maschine möglich, wobei die elastischen Verschiebungen des nun mit entsprechend großem Durchmesser ausgeführten Schwungringes deutlich größer sein dürfen, als die des Maschinenrotors. Dieser kann in Außenläufer- oder Innenläuferbauweise ausgeführt werden, da nun lediglich mit dem rotierenden Teil der elektrischen Maschinen eine radialelastische Speichenstruktur verbunden wird, welche die Differenz in den Radialverschiebungen überbrückt. Das polare Trägheitsmoment Jₚ dieser Anordnung ist hierbei größer als das axiale Trägheitsmoment Jₐ, so dass ein Durchfahren der zweiten biegekritischen Drehzahl nicht mehr erforderlich ist. Die Radialelastizität der Speichenstruktur wird häufig durch biegeelastische Speichenformen erreicht, wie sie beispielsweise in der US-Patentschrift 5 760 506 oder in der Dissertation von C. Wrede "Schwungmassen Energiespeicher mit integrierten Funktionselementen", Diss. TU-BS, 1998, beschrieben sind. Nachteilig bei solchen Strukturen sind die bei großen Leistungen wegen der begrenzten Umfangsgeschwindigkeit des Antriebs erheblichen axialen Abmessungen der elektrischen Maschine und die erforderliche Steifigkeit der bei hohen Drehzahlen gebogenen Speichen in Umfangsrichtung, die zum Übertragen großer Drehmomente erforderlich wird. Die gebogenen Speichen sind hierbei bei hoben Drehzahlen im allgemeinen nicht mehr hinreichend steif.

Eine dritte Ausführungsform von Schwungsradspeichern benutzt einen als relativ dünne Schale ausgeführten, glockenförmigen, in Form eines Abschnittes eines Rotationsellipsoiden ausgeführten Schwungkörper, in dessen Scheitelpunkt die Welle der konventionell ausgeführten elektrischen Maschine angekoppelt ist (Das Faserverbundschwungrad als Energiespeicher, Firmenschrift "WTZ Roßlau gGmbH", Postfach 240, 06855 Roßlau). Die elastischen Dehnungen werden hier als Biegemomente in der Schalenstruktur des Schwungringes aufgenommen. Diese Anordnung kann zwar sehr hohe spezifische Energiedichten erreichen, die absolut einspeicherbare Energie und das übertragbare Drehmoment sind jedoch vergleichsweise gering oder führen bei größeren Energiemengen und Leistungen zu technologisch nicht mehr beherrschbaren Schwungringabmessungen sowie Problemen in der Krafteinleitung.

Aus der US-4,821,599 ist ein Schwungrad bekannt, das auf einem konischen Wellenzapfen angeordnet ist. Auf dem Wellenzapfen ist eine Hülse aufgeschoben, auf der ein Bund mit Absätzen aufgebracht ist.

Auf diesem Bund sind konkave Koppeleinrichtungen festgelegt, die den Wellenbund mit einem äußeren Schwungring verbinden. Durch den leichten Wellenstumpf als zentrales Element und dem weich gelagerten, weit beabstandeten Schwungring besteht bei dieser Anordnung die Gefahr einer Kippbewegung.

Der Erfindung liegt die Aufgabe zugrunde, gegenüber dem Stand der Technik, insbesondere gegenüber den oben genannten Problemen, Verbesserungen zu schaffen und insbesondere die Speicherung hoher Rotationsenergien sowie die Übertragung großer Drehmomente und Leistungen zu ermöglichen.

Diese Aufgabe wird bei dem eingangs genannten Schwungrad gelöst, indem die Koppeleinrichtung radial elastisch ausgebildet ist und unter einer radialen, den Schwungring nach außen drückenden Vorspannung steht und die Koppeleinrichtung bei ruhender Maschine aufgrund der elastischen Vorspannung gewölbt oder gebogen ist und sich die Wölbung oder Biegung bei höheren Drehzahlen verringert.

Der Erfindung liegt der Gedanke zugrunde, den Schwungring und den inneren Ring, der vorteilhafterweise den Rotor der elektrischen Maschine mit umfasst bzw. integral aufnimmt, räumlich zu trennen. Da die Verwendung von Schwungringen, die aus Faserwickelkörpern größerer radialer Dicke gebildet sind, wie oben geschildert beispielsweise zu einer geringen radialen Zugfestigkeit oder zu Eigenspannungen führen, wird erfindungsgemäß der Schwungring räumlich von dem inneren Ring getrennt. Somit kann bei begrenzter radialer Zugfestigkeit die tangentiale Zugfestigkeit des Schwungrings voll ausgenutzt werden, so dass höhere Umfangsgeschwindigkeiten eingestellt werden können. Da der Schwungring weiterhin durch den Zwischenraum radial weiter von dem Rotor entfernt ist, wird das Trägheitsmoment und somit bei gleicher Umlaufgeschwindigkeit die gespeicherte Rotationsenergie erhöht. Durch die Entkopplung von Schwungring und inneren Ring bzw. Rotor der elektrischen Maschine können somit radial weiter außenliegende Schwungringe mit einer relativ kleinen relativen Dicke, d. h. einem kleinen Verhältnis von Außenradius zu Innenradius verwendet werden.

Indem die Koppeleinrichtung elastisch ausgebildet und unter einer radialen Vorspannung steht, kann eine gute Ankopplung des Schwungringes an dem inneren Ring auch bei höheren Umlaufgeschwindigkeiten bzw. Drehzahlen erreicht werden. Die Koppeleinrichtung gibt hierbei elastisch nach und erreicht bei den gewünschten Betriebsgeschwindigkeiten einen zumindest teilweise entspannten Zustand, in dem sie eine gute Übertragung der Drehmomente, insbesondere auch bei hohen Leistungen gewährleistet. Hierbei wird eine Koppeleinrichtung verwendet werden, die bei ruhender Maschine aufgrund der elastischen Vorspannung gewölbt oder gebogen ist, wobei diese Wölbung oder Biegung bei höheren Drehzahlen, entsprechend verringert wird. Erfindungsgemäß wird somit die elastische Nachgiebigkeit gewährleistet, ohne daß hierbei die Steifigkeit der Koppeleinrichtung beeinträchtigt wird.

Die elastische Koppeleinrichtung kann insbesondere durch Federringe gebildet werden, da diese eine hinreichend große Steifigkeit zur Übertragung von Drehmomenten in Umfangsrichtung aufweisen. Die Federringe können dabei als Ringe aus z.B. einem Faserverbundwerkstoff gebildet werden. Bei hohen Umlaufgeschwindigkeiten entspannen sich diese Ringe zumindest teilweise, so daß eine im gespannten Zustand eventuell vorhandene Wölbung oder Biegung zumindest weitgehend verschwindet. Hierbei können insbesondere zwei oder mehr Federringe verwendet werden, die auf gegenläufigen Kegelmänteln angeordnet werden, so daß sie durch eine Wölbung in axialer Richtung eine größere Vorspannung aufnehmen können und durch ihre gegenläufige Anordnung die in axialer Richtung ausgeübten Kräfte kompensiert werden, so daß der Schwungring fest auf dem inneren Ring fixiert wird und keine axialen Kräfte erfährt.

Der innere Ring kann insbesondere durch den Rotor sowie einem Stützring zur Aufnahme der Koppeleinrichtung ausgebildet werden. Hierbei kann insbesondere zwischen Stützring und Rotor ein Tragring ausgebildet werden, wobei der Tragring z.B. aus hochfestem Fasermaterial hergestellt werden kann, so daß er die Fliehkraft bedingten Radiallasten aufnehmen kann, und der Stützring aus einem Fasermaterial mit hohen Elastizitätsmodul gebildet werden kann, so daß er die Umfangsdehnung begrenzt.

Die Verbindung zwischen dem inneren Ring und dem Schwungring kann stoffschlüssig oder reibschlüssig, insbesondere auch formschlüssig durch Erhöhungen und/oder Vertiefungen im Schwungring und im inneren Ring und eine entsprechende entgegengesetzte Ausbildung der Koppeleinrichtung erreicht werden.

Eine hohe Elastizität in axialer und tangentialer Richtung kann z.B. bei den oben beschriebenen Federringen erreicht werden, indem diese radial verlaufende Schlitze aufweisen, wobei diese Schlitze gleichzeitig zum formschlüssigen Einbau des Federringes zwischen Schwungring und innerem Ring genutzt werden, indem die Schlitze Erhöhungen des inneren Ringes bzw. Schwungringes aufnehmen.

Weiterhin kann der Rotor der elektrischen Maschine mit radial verlaufenden bzw. zickzackförmig radial verlaufenden Trennfugen ausgebildet sein, die bei höheren Umlaufgeschwindigkeiten etwas geöffnet werden, so daß höhere Umlaufgeschwindigkeiten ohne Beschädigung des Rotors möglich ist. Die Trennfugen wirken dabei in einem Rotorjoch lediglich als zusätzlicher Luftspalt, dessen Veränderungen das Betriebsverhalten des Antriebs im allgemeinen nur unwesentlich beeinflussen.

Die Erfindung wird im folgenden anhand der beiliegenden Zeichnungen an einigen Ausführungsformen näher erläutert. Es zeigen:
- Fig. 1a -: einen Radialschnitt durch einen inneren Ring gemäß einer ersten Ausführungsform der Erfindung;
- Fig. 1b -: einen Radialschnitt durch einen inneren Ring gemäß einer zweiten Ausführungsform der Erfindung;
- Fig. 2 -: einen Axialschnitt durch ein Schwungrad gemäß einer Ausführungsform der Erfindung;
- Fig. 3 -: einen Radialschnitt durch einen radial äußeren Bereich des Schwungrades aus Fig. 2;
- Fig. 4 -: den Auschnitt IV aus Fig. 3.

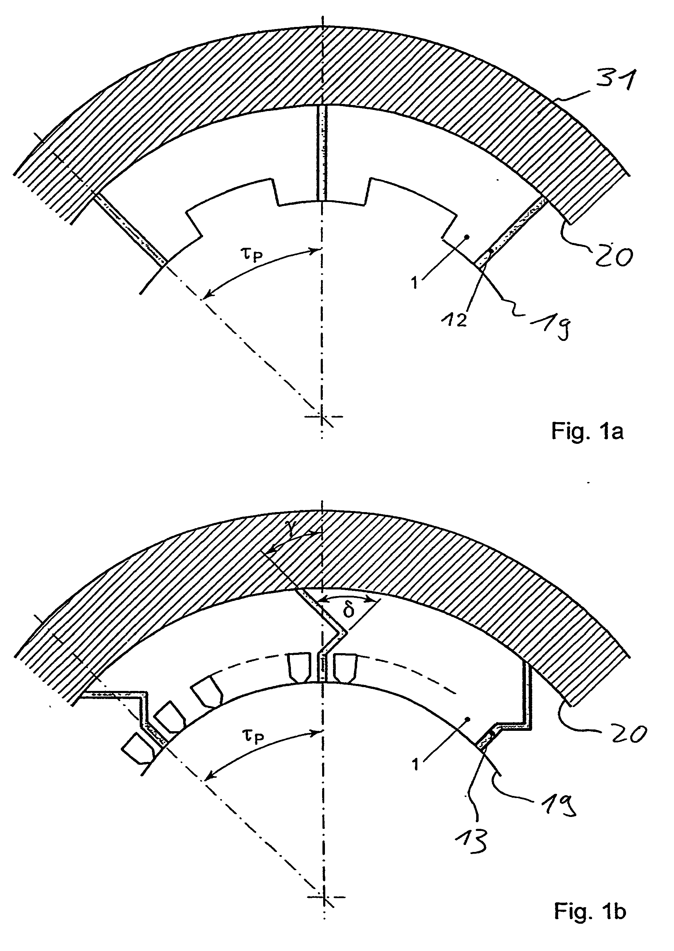

Gemäß Fig. 1a, 1b ist ein Rotor 1 vorgesehen, der durch Trennfugen 12, 13 in mehrere Abschnitte unterteilt ist. Die Trennfugen 12, 13 verlaufen hierbei von einem radial inneren Rand 19 zu einem radial äußeren Rand 20. Der Rotor 1 kann insbesondere als Rotorjoch als Außenläufer einer elektrischen Maschine dienen. Jeder durch die Trennfugen 12, 13 erzeugte Abschnitt erspricht vorteilhafterweise einer Polteilung. Bei synchronen Energiewandlern, z.B. Synchronmaschinen, Reluktanzmaschinen und dauermagneterregten Maschinen ist hierbei dieser Winkel tₚ bei einer Teilung des Rotors jeweils in Polmitte zweckmäßig auf Null anzusetzen. Bei Asynchronmaschinen kann der Schnittwinkel so festgelegt werden, daß der magnetische Leitwert des entsprechenden Luftspaltes verglichen mit dem Hauptluftspalt der Maschine entsprechend groß ausfällt. Die Trennfugen können direkt radial nach außen, wie in Fig. 1a gezeigt, oder gemäß Fig. 1b in einer Zickzackbewegung nach außen verlaufen. In den Trennfugen 12, 13 kann als vorteilhafter Ausgestaltung ein elastisches Zwischenlager eingesetzt sein, das zur Vorspannung des Rotors dienen kann.

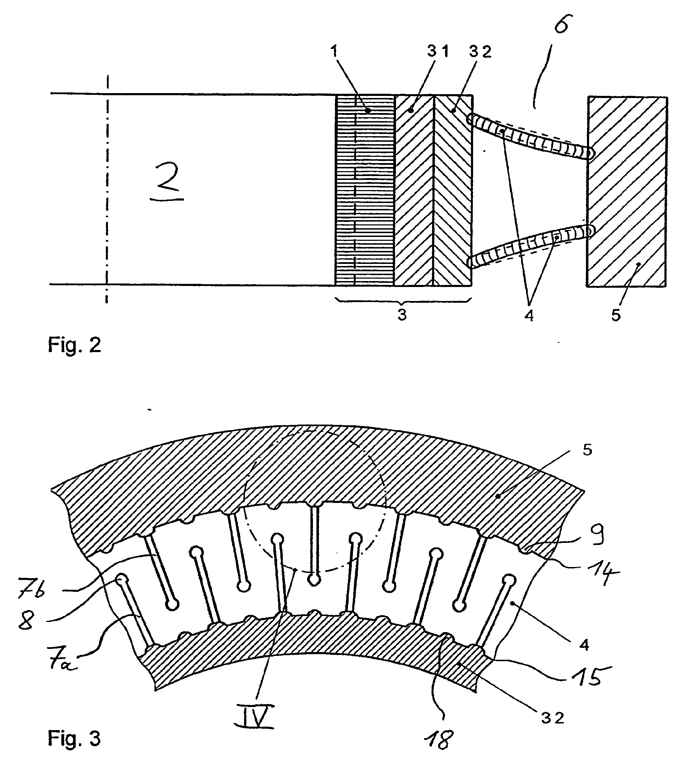

Auf dem Rotor 1 ist gemäß Fig. 2 ein Tragring 31 aus hochfestem Fasermaterial (High Tenacity Fibres, HT-Faser) ausgebildet, welcher die Fliehkraft bedingten Radiallasten des unterteilten Rotorjoches 1 aufnimmt. Auf dem Tragring 31 ist ein Stützring 32 aus Fasermaterial mit hohem Elastizitätsmodul (High Modulus Fibres, HM-Faser) aufgebracht, der die Umfangsdehnungen begrenzt. Eine derartige Ausführung des inneren Ringes 3 erlaubt z.B. Umfangsgeschwindigkeiten von 300 bis 400 m/sec. Die Trennfugen 12, 13, öffnen sich hierbei unter Fliehkraft nur um wenige Zehntel Millimeter, und beeinflussen als zusätzlicher, veränderbarer Luftspalt das Betriebsverhalten des Antriebs nur unwesentlich.

Erfindungsgemäß dient somit der innere Ring 3 als Rotor bzw. Verbundrotor, bei dem lediglich der Rotor 1 bzw. das Rotorjoch 1 einen Teil der elektrischen Maschine 2 bildet.

Ein Schwungring 5 weist einen Innendurchmesser auf, der größer als der Außendurchmesser des inneren Ringes bzw. Verbundrotors 3 ist. Somit wird ein radialer Zwischenraum 6 gebildet, in dem eine Koppeleinrichtung zur Ankopplung des Schwungringes 5 an den inneren Ring 3 vorgesehen ist. Die Koppeleinrichtung 4 steht dabei unter einer radialen Vorspannung. Sie kann beispielsweise, wie in Fig. 2 gezeigt, durch zwei Tellerfedern bzw. Federringe aus einem Faserverbundwerkstoff gebildet werden. Diese Federringe bzw. Tellerfedern können insbesondere gegenüber dem Elastizitätsmodul des Tragringes 31 und des Stützringes 32 ein geringeres Elastizitätsmodul aufweisen und z.B. aus einem Glasfaser verstärkten Kunststoff oder einem Aramidfaser verstärktem Kunststoff bestehen. Bei hinreichend radialer Vorspannung bilden die Ringfedern eine in Fig. 2 gezeigte Verwölbung in axialer Richtung aus. Die Ringfedern 4 sind in Fig. 2 gegenläufig angeordnet, so daß insgesamt keine axiale Kraft von dem inneren Ring 3 auf den Schwungring 5 ausgeübt wird. Die Ringfedern 4 können hierbei in Umfangsnuten des Stützringes 32 und des Schwungringes 5 aufgenommen werden.

Der Schwungring 5 kann je nach Speicheranforderungen, insbesondere Anforderungen bezüglich Leistung, Drehzahl und zu speichernder Energiemenge ausgelegt werden. Hierbei kann insbesondere ein Fasermaterial mit hohem Elastizitätsmodul oder auch hoher Festigkeit verwendet werden. Bei Rotation wird sich der Schwungring 5 aufgrund der höheren Umlaufgeschwindigkeiten stärker dehnen, wodurch der radiale Zwischenraum 6 sich vergrößert. Die unter radialer Vorspannung stehenden Tellerfedern 4 entspannen sich hierbei zumindest teilweise und nehmen somit die in Fig. 2 gestrichelte Kontur an. Hierbei kann sich insbesondere bei hohen Betriebsgeschwindigkeiten eine vollständige oder überwiegende Rückbildung der axialen Verwölbung einstellen, so daß die Tellerfedern 4 ganz oder überwiegend spannungsfrei sind. Somit kann eine hinreichend steife Konstruktion die sowohl eine radiale Zentrierung des Schwungringes als auch die Übertragung hoher Drehmomente zwischen Schwungring 5 und innerem Ring 3 bei allen Drehzahlen gewährleistet, erreicht werden.

Durch die Ausbildung eines Tragringes 31 und zusätzlichen Stützringes 32 können die jeweiligen Eigenschaften des Rotors 1, der im allgemeinen als Blechpaket ausgebildet ist und eine relativ große Nachgiebigkeit in Umfangsrichtung aufweist, mit den weiteren Fasereigenschaften des Tragringes und Stützringes kombiniert werden. Weiterhin kann der Aufbau der Tellerfedern 4 an die Anforderung, insbesondere an den Aufbau und die Eigenschaften des Schwungringes 5 angepaßt werden. Bei einer entsprechenden Anpassung der Materialeigenschaften, insbesondere der Festigkeiten und Elastizitätsmodule des Schwungringes 5, Stützringes 22, Tragringes 31 und der Tellerfedern 4 können die Differenzverschiebung zwischen Schwungring 5 und innerem Ring 3 zumindest überwiegend ausgeglichen werden. Über die Tellerfedern 4 kann eine Krafteinleitung über nahezu den vollen Umfang erfolgen, so daß die Beanspruchung an den Fügestellen vergleichsweise gering ist. Die Tellerfedern 4 können formschlüssig, reibschlüssig oder stoffschlüssig mit dem Schwungring 5 und dem inneren Ring 3, d.h. dem Stützring 32 verbunden werden.

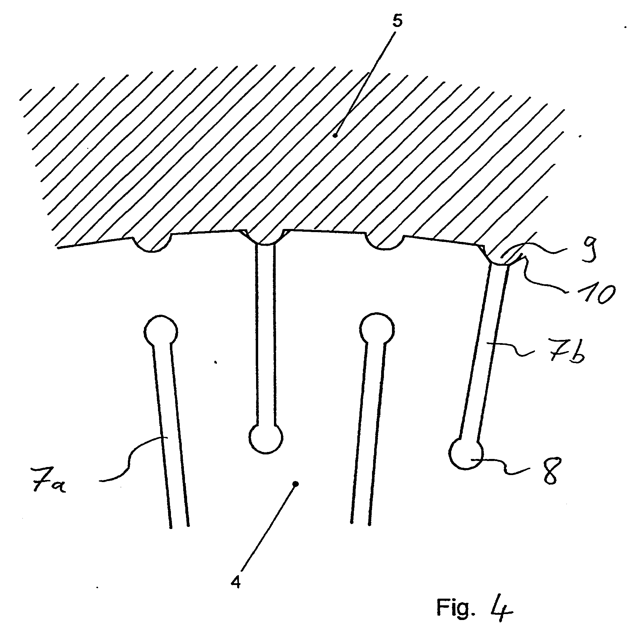

Hierbei kann insbesondere gemäß Fig. 3 eine formschlüssige Ausbildung erreicht werden, bei der in dem Stützring 32 und/oder dem Schwungring 5 Erhöhungen 9, 18 oder entsprechende Vertiefungen ausgebildet sind, in die entsprechende Vertiefungen bzw. Erhöhungen der Ringfedern 4 bzw. Tellerfedern eingreifen. Vorteilhafterweise kann eine hohe Elastizität der Ringfedern 4 erreicht werden, indem diese radial geschlitzt sind. Sie können insbesondere wie in Fig. 3 gezeigt von ihrem inneren Rand 15 ausgehende Schlitze 7a und von ihrem äußeren Rand 14 ausgehende radiale Schlitze 7b aufweisen, die wie in Fig. 3 gezeigt, alternierend angeordnet sein können. Die Schlitzenden können dabei durch Rundungen 8 begrenzt sein, um eine Rißbildung zu vermeiden. Wie in Fig. 3 und Fig. 4 gezeigt, können die Schlitze 7a, 7b zur Aufnahme der Erhöhungen 9, 18 genutzt werden, wobei sie diese Erhöhungen in z.b. konisch ausgebildeten Schlitzenden 10 aufnehmen.

## Patentansprüche

1. Schwungrad zur Speicherung von Rotationsenergie, mit einem mit einer rotierenden Maschine (2) verbindbaren inneren Ring (3), einem radial äußeren Schwungring (5) und
einer Koppeleinrichtung (4) zur Übertragung von Drehmomenten, die in einem radialen Zwischenraum (6) zwischen dem inneren Ring (3) und dem Schwungring (5) vorgesehen ist und mit dem inneren Ring (3) und dem Schwungring (5) verbunden ist, wobei die Koppeleinrichtung (4) radial elastisch ausgebildet ist und unter einer radialen, den Schwungring (5) nach außen drückenden Vorspannung steht,
**dadurch gekennzeichnet, dass** die Koppeleinrichtung (4) bei ruhender Maschine aufgrund der elastischen Vorspannung gewölbt oder gebogen ist und sich die Wölbung oder Biegung bei höheren Drehzahlen verringert.

2. Schwungrad nach Anspruch 1, **dadurch gekennzeichnet, dass** der innere Ring (3) einen Rotor (1) und einen radial außen angeordneten Tragring (32) zur Aufnahme der Koppeleinrichtung (4) aufweist.

3. Schwungrad nach Anspruch 2, **dadurch gekennzeichnet, dass** zwischen dem Rotor (1) und dem Tragring (32) ein Stützring (31) angeordnet ist.

4. Schwungrad nach Anspruch 2 oder 3, **dadurch gekennzeichnet, dass** der Tragring (32) aus einem Faserverbundwerkstoff, vorzugsweise einem kohlefaserverstärkten Kunststoff hergestellt sind.

5. Schwungrad nach Anspruch 4, **dadurch gekennzeichnet, dass** der Tragring (32) im wesentlichen in Umfangsrichtung gewickelte Faserverbundwerkstofflagen sind.

6. Schwungrad nach Anspruch 3, **dadurch gekennzeichnet, dass** der Stützring (31) aus einem Faserverbundwerkstoff, vorzugsweise einem kohlefaserverstärkten Kunststoff hergestellt ist.

7. Schwungrad nach Anspruch 6, **dadurch gekennzeichnet, dass** der Stützring (31) im wesentlichen in Umfangsrichtung gewickelte Faserverbundwerkstofflagen sind.

8. Schwungrad nach einem der Ansprüche 3 bis 7, **dadurch gekennzeichnet, dass** das Material des Tragringes (32) ein höheres Elastizitätsmodul und/oder eine geringere Festigkeit als das Material des Stützringes (31) aufweist.

9. Schwungrad nach einem der Ansprüche 1 bis 8, **dadurch gekennzeichnet, dass** die Koppeleinrichtung (4) formschlüssig und/-oder stoffschlüssig und/oder reibschlüssig mit dem inneren Ring (3) und dem Schwungring (5) verbunden ist.

10. Schwungrad nach einem der Ansprüche 1 bis 9, **dadurch gekennzeichnet, dass** die Koppeleinrichtung einen oder mehrere Federring(e), vorzugsweise aus einem Faserverbundwerkstoff, aufweist, der bzw. die zwischen dem inneren Ring (3) und dem Schwungring (5) gespannt ist/sind.

11. Schwungrad nach einem der Ansprüche 1 bis 10, **dadurch gekennzeichnet, dass** der Federring bzw. die Federringe radial geschlitzt ist/sind.

12. Schwungrad nach Anspruch 11, **dadurch gekennzeichnet, dass** der Federring bzw. die Federringe (4) Schlitze (7b, 7b) aufweisen, die alternierend von einem äußeren Rand (14) des Federringes radial nach innen und von einem inneren Rand (15) des Federringes radial nach außen verlaufen.

13. Schwungrad nach Anspruch 12, **dadurch gekennzeichnet, dass** der innere Ring (3) und/oder der Schwungring (5) Erhöhungen (9, 18) aufweisen, die von den Schlitzen (7a, 7b) des Federringes bzw. der Federringe (4) aufgenommen werden.

14. Schwungrad nach einem der Ansprüche 1 bis 13, **dadurch gekennzeichnet, dass** mindestens zwei als Tellerfedern ausgebildete Federringe (4) vorgesehen sind, die in axialer Richtung des Schwungrades gegenläufig geneigt sind und vorzugsweise jeweils auf Kegelmänteln verlaufen, deren Kegelachse mit der Drehachse der rotierenden Maschine (2) übereinstimmt.

15. Schwungrad nach Anspruch 14, **dadurch gekennzeichnet, dass** eine durch die elastische Vorspannung erzeugte Wölbung der mindestens zwei Federringe (4) bei einer Drehzahl im Bereich der rotierenden Maschine (2) zumindest weitgehend verschwindet.

16. Schwungrad nach einem der Ansprüche 1 bis 15, **dadurch gekennzeichnet, dass** der Rotor (1) sich von seinem radial inneren Rand (19) zu seinem radial äußeren Rand (20) erstreckende Dehnungsfugen (12, 13) aufweist.

17. Schwungrad nach Anspruch 16, **dadurch gekennzeichnet, dass** die Dehnungsfugen (12) zumindest weitgehend radial, vorzugsweise genau radial verlaufen.

18. Schwungrad nach Anspruch 16, **dadurch gekennzeichnet, dass** die Dehnungsfugen (13) zumindest abschnittsweise unter einem Winkel (γ) gegen die radiale Richtung, vorzugsweise zickzackförmig nach au-ßen, verlaufen.

19. Schwungrad nach einem der Ansprüche 16 bis 18, **dadurch gekennzeichnet, dass** in den Dehnungsfugen (12, 13) ein elastisches Material vorgesehen ist.

20. Schwungrad nach einem der Ansprüche 2-8, **dadurch gekennzeichnet, dass** der Rotor (1) mit der Maschine (2) verbindbar ist.

21. Anordnung bestehend aus einem Schwungrad nach einem der Ansprüche 2-8 und einer Maschine, **dadurch gekennzeichnet, dass** der Rotor (1) einen Teil der Maschine (2) bildet.

## Claims

1. Flywheel for the storage of rotational energy, having an inner ring (3) which can be connected to a rotating machine (2), a radially outer fly ring (5) and a coupling device (4) for transmitting toques which is provided in a radial intermediate space (5) between the inner ring (3) and the fly ring (5) and is connected to the inner ring (3) and the fly ring (5), the coupling device (4) being of radially elastic design and being under a radial prestress which forces the fly ring (5) outwards, **characterized in that** when the machine is stationary the coupling device (4) is curved or bent owing to the elastic prestress and the curvature or bending is reduced at higher rotational speeds.

2. Flywheel according to Claim 1, **characterized in that** the inner ring (3) has a rotor (1) and a bearing ring (32) which is arranged radially on the outside and has the purpose of holding the coupling device (4).

3. Flywheel according to Claim 2, **characterized in that** a supporting ring (31) is arranged between the rotor (1) and the bearing ring (32).

4. Flywheel according to Claim 2 or 3, **characterized in that** the bearing ring (32) is manufactured from a fibre composite material, preferably a carbon-fibre-reinforced plastic.

5. Flywheel according to Claim 4, **characterized in that** the bearing ring (32) comprises essentially layers of fibre composite material wound on in the circumferential direction.

6. Flywheel according to Claim 3, **characterized in that** the supporting ring (31) is manufactured from a fibre composite material, preferably a carbon-fibre-reinforced plastic.

7. Flywheel according to Claim 6, **characterized in that** the supporting ring (31) comprises essentially layers of fibre composite material wound on in the circumferential direction.

8. Flywheel according to one of Claims 3 to 7, **characterized in that** the material of the bearing ring (32) has a higher modulus of elasticity and/or lower strength than the material of the supporting ring (31).

9. Flywheel according to one of Claims 1 to 8, **characterized in that** the coupling device (4) is connected in a positively locking and/or materially joined and/or frictionally locking fashion to the inner ring (3) and to the flywheel (5).

10. Flywheel according to one of Claims 1 to 9, **characterized in that** the coupling device has one or more spring rings, preferably made of a fibre composite material, which is/are clamped between the inner ring (3) and the fly ring (5).

11. Flywheel according to one of Claims 1 to 10, **characterized in that** the spring ring or spring rings is/are slotted radially.

12. Flywheel according to Claim 11, **characterized in that** the spring ring or spring rings (4) have slots (7a, 7b) which alternately extend radially inwards from an outer edge (14) of the spring ring and radially outwards from an inner edge (15) of the spring ring.

13. Flywheel according to Claim 12, **characterized in that** the inner ring (3) and/or the fly ring (5) have elevations (9, 18) which are received via the slots (7a, 7b) of the spring ring or of the spring rings (4).

14. Flywheel according to one of Claims 1 to 13, **characterized in that** at least two spring rings (4) which are embodied as disc springs are provided and are inclined in opposite directions in the axial direction of the flywheel and preferably each extend on conical lateral surfaces whose cone axis corresponds to the rotational axis of the rotating machine (2).

15. Flywheel according to Claim 14, **characterized in that** a curvature of the at least two spring rings (4) which is generated by the elastic prestress at least largely disappears at a rotational speed in the region of the rotating machine (2).

16. Flywheel according to one of Claims 1 to 15, **characterized in that** the rotor (1) has expansion joints (12, 13) extending from its radially inner edge (19) to its radially outer edge (20).

17. Flywheel according to Claim 16, **characterized in that** the expansion joints (12) extend at least largely radially and preferably precisely radially.

18. Flywheel according to Claim 16, **characterized in that** the expansion joints (13) extend at least in certain sections at an angle (γ) with respect to the radial direction, preferably outwards in a zigzag shape.

19. Flywheel according to one of Claims 16 to 18, **characterized in that** an elastic material is provided in the expansion joints (12, 13).

20. Flywheel according to one of Claims 2 to 8, **characterized in that** the rotor (1) can be connected to the machine (2).

21. Arrangement composed of a flywheel according to one of Claims 2-8 and a machine, **characterized in that** the rotor (1) forms part of the machine (2).

## Revendications

1. Volant pour le stockage d'énergie de rotation, avec un anneau interne (3) reliable à une machine rotative (2), un anneau radial externe d'entraînement (5) et un dispositif de couplage (4) pour la transmission de couples de rotation, le dispositif de couplage étant prévu dans un espace radial (6) entre l'anneau interne (3) et l'anneau d'entraînement (5), et étant relié à l'anneau interne (3) et à l'anneau d'entraînement (5), le dispositif de couplage (4) étant formé avec une élasticité radiale, et étant tenu sous une précontrainte radiale poussant l'anneau d'entraînement (5) vers l'extérieur, **caractérisé en ce que** le dispositif de couplage (4) est voûté ou courbé en raison de la précontrainte élastique en état statique de la machine, et **en ce que** la voûte ou la courbure s'amoindrit à des vitesses de rotation plus grandes.

2. Volant selon la revendication 1, **caractérisé en ce que** l'anneau interne (3) présente un rotor (1) et un anneau porteur (32) agencé radialement à l'extérieur pour recevoir le dispositif de couplage (4).

3. Volant selon la revendication 2, **caractérisé en ce qu'**un anneau d'appui (31) est agencé entre le rotor (1) et l'anneau porteur (32).

4. Volant selon la revendication 2 ou 3, **caractérisé en ce que** l'anneau porteur (32) est fabriqué dans une matière associant des fibres, de préférence une matière synthétique renforcée de fibres de carbone.

5. Volant selon la revendication 4, **caractérisé en ce que** l'anneau porteur (32) consiste pour l'essentiel en des couches de matière associant des fibres et enroulées selon la circonférence.

6. Volant selon la revendication 3, **caractérisé en ce que** l'anneau d'appui (31) est fabriqué dans une matière associant des fibres, de préférence une matière synthétique renforcée de fibres de carbone.

7. Volant selon la revendication 6, **caractérisé en ce que** l'anneau d'appui (31) consiste pour l'essentiel en des couches de matière associant des fibres et enroulées selon la circonférence.

8. Volant selon l'une des revendications 3 à 7, **caractérisé en ce que** le matériau de l'anneau porteur (32) présente un module élastique supérieur et/ou une fermeté inférieure au matériau de l'anneau d'appui (31).

9. Volant selon l'une des revendications 1 à 8, **caractérisé en ce que** le dispositif de couplage (4) est relié à l'anneau interne (3) et l'anneau d'entraînement (5) par liaison de formes et/ou par liaison de matières et/ou par liaison par friction.

10. Volant selon l'une des revendications 1 à 9, **caractérisé en ce que** le dispositif de couplage présente une ou plusieurs rondelle(s) élastique(s) bombée(s), de préférence en une matière associant des fibres, qui est/sont tendue(s) entre l'anneau interne (3) et l'anneau d'entraînement (5).

11. Volant selon l'une des revendications 1 à 10, **caractérisé en ce que** la/les rondelle(s) élastique(s) bombée(s) est/sont tendue(s) radialement.

12. Volant selon la revendication 11, **caractérisé en ce que** la/les rondelle(s) élastique(s) bombée(s) (4) présente(ent) des fentes (7a, 7b) qui s'étendent alternativement d'un bord externe (14) de la rondelle élastique bombée radialement vers l'intérieur et d'un bord interne (15) de la rondelle élastique bombée radialement vers l'extérieur.

13. Volant selon la revendication 12, **caractérisé en ce que** l'anneau interne (3) et/ou l'anneau d'entraînement (5) présentent des reliefs (9, 18) inscrits au niveau des fentes (7a, 7b) de la ou des rondelle(s) élastique(s) bombée(s) (4).

14. Volant selon l'une des revendications 1 à 13, **caractérisé en ce qu'**au moins deux rondelles élastiques bombées (4) façonnées comme des ressorts à disques sont prévues, les rondelles penchant de façon opposée selon la direction axiale du volant, et s'étendant de préférence en une surface conique dont l'axe de cône correspond à l'axe de rotation de la machine rotative (2).

15. Volant selon la revendication 14, **caractérisé en ce qu'**une voûte des aux moins deux rondelles élastiques bombées (4), engendrée par la précontrainte élastique, disparaît du moins largement à une vitesse de rotation de la machine rotative (2).

16. Volant selon l'une des revendications 1 à 15, **caractérisé en ce que** le rotor (1) présente des joints de dilatation (12, 13) s'étendant de son bord radial interne (19) à son bord radial externe (20).

17. Volant selon la revendication 16, **caractérisé en ce que** les joints de dilatation (12) s'étendent du moins largement radialement, de préférence strictement radialement.

18. Volant selon la revendication 16, **caractérisé en ce que** les joints de dilatation (13) s'étendent du moins par des passages selon un angle (γ) par rapport à la direction radiale, de préférence en forme de zigzag vers l'extérieur.

19. Volant selon l'une des revendications 16 à 18, **caractérisé en ce qu'**un matériau élastique est prévu dans les joints de dilatation (12, 13).

20. Volant selon l'une des revendications 2 à 8, **caractérisé en ce que** le rotor (1) est reliable à la machine (2).

21. Agencement composé d'un volant selon l'une des revendications 2 à 8, et d'une machine, **caractérisé en ce que** le rotor (1) constitue une partie de la machine (2).
